# EUROPÄISCHE PATENTSCHRIFT

(11) **EP 1 244 198 B1**
(45) Veröffentlichungstag und Bekanntmachung des Hinweises auf die Patenterteilung: **01.08.2007**
(21) Anmeldenummer: 01106968.9
(22) Anmeldetag: 21.03.2001
(51) Int. Cl.: H02K 15/02, H02K 29/08, H02K 1/16

(54) **Stator mit Nuten mit einem aufgeweiteten Bereich zur Aufnahme eines Sensors und Verfahren zur Hertellung eines solchen Stators**
Stator with slots having an enlarged portion for arranging a sensor and method for manufacturing such a stator
Stator avec des encoches ayant une portion élargie pour y placer un capteur et procédé pour fabriquer un tel stator

(43) Veröffentlichungstag der Anmeldung: 25.09.2002
(73) Patentinhaber: GRUNDFOS A/S, DK-8850 Bjerringbro (DK)
(72) Erfinder: Schmitt, Jorgen, 9560 Hadsund (DK); Solvstrom , Jens, 8900 Randers (DK)
(74) Vertreter: Vollmann, Heiko

(56) Entgegenhaltungen:
- GB-A- 2 345 586

## Beschreibung

Die Erfindung betrifft den Stator eines Elektromotors, insbesondere eines Permanentmagnetmotors mit den im Oberbegriff des Anspruchs 1 angegebenen Merkmalen.

Bei Permanentmagnetmotoren ist üblicherweise ein mit mehreren Permanentmagneten versehener Rotor drehbar innerhalb eines Stators gelagert. Der Stator besteht dabei meist aus einem Statorblechpaket, das im Wesentlichen ringförmig ausgebildet ist, um den darin umlaufenden Rotor aufzunehmen. An der Innenseite des Stators sind nach innen, also zum Rotor bzw. zur Statorachse hin offene Nuten vorgesehen, in welchen die Statorwicklungen geführt sind.

Für den Betrieb eines solchen, z. B. bürstenlosen Gleichstrommotors ist es erforderlich, die Statorwicklungen in Abhängigkeit der Rotorstellung anzusteuern, d. h. zu kommutieren. Es ist also stets erforderlich, die aktuelle Rotorstellung zu erfassen, um den Motor in geeigneter Weise ansteuern zu können. Hierzu kann beispielsweise ein Hallsensor statorseitig vorgesehen sein. Da im Bereich der Statorwicklungen für einen Hallsensor kein Raum zur Verfügung steht und im Übrigen die Nutform insbesondere bei kleinen Motoren den Einsatz handelsüblicher Hallsensoren nicht erlaubt, wird der Stator über den eigentlichen Wicklungsbereich hinaus verlängert und der Hallsensor im Bereich dieser Statorverlängerung angebracht. In gleicher Weise muss der Rotor verlängert werden, was in der Praxis dazu führt, dass der Motor eine vergleichsweise große axiale Baulänge aufweist und darüber hinaus der Rotor aufgrund der ebenfalls erhöhten Baulänge schwerer ist, als er eigentlich sein müsste. Dieses Mehrgewicht führt zu Wirkungsgradverlusten und zu einer höheren Trägheit des Rotors. Darüber hinaus entsteht ein erhöhter Materialaufwand motor- und statorseitig.

Aus GB-A-2 345 586 ist es bekannt, die Statornuten abschnittsweise breiter auszubilden, um dort einen Hallsensor eingliedern zu können. Hierzu sind die Satorbleche, welche den oder dies Sensoren aufnehmen, so gestanzt, dass die Nut in diesem Bereich entsprechend breiter ausgebildet ist.

Diese Ausbildung hat den Nachteil, dass an den Stellen, wo die Nut breiter zur Aufnahme des Sensors ausgebildet ist, der magnetische Fluss durch das dort fehlende Material vermindert ist.

Vor diesem Hintergrund liegt der vorliegenden Erfindung die Aufgabe zugrunde, einen gattungsgemäßen Stator so auszubilden, dass die vorgenannten Nachteile vermieden werden und der Stator kostengünstig in Großserie herstellbar ist. Darüber hinaus soll ein Verfahren zur kostengünstigen Herstellung eines solchen Stators geschaffen werden.

Der vorrichtungsmäßige Teil dieser Aufgabe wird durch einen Stator mit den in Anspruch 1 angegebenen Merkmalen gelöst. Ein Verfahren zur Herstellung eines solchen Stators ist in Anspruch 5 angegeben. Vorteilhafte Ausgestaltungen der Erfindung sind in den Unteransprüchen, der nachfolgenden Beschreibung und der Zeichnung angegeben.

Grundgedanke der vorliegenden Erfindung ist es, mindestens eine Nut über mindestens einen Abschnitt ihrer Länge nahe ihrer zur Statorachse hin offenen Innenseite breiter als die übrigen Nuten des Stators auszubilden, um hier einen magnetfeldempfindlichen Sensor, inbesondere einen Hallsensor für die Kommutierungssteuerung anzuordnen. Durch eine solche Nutverbreiterung kann auch bei Motoren kleiner Baugröße und Leistung ein handelsüblicher Hallsensor gegebenenfalls nach Einbettung in ein Schutzgehäuse in den Stator eingegliedert werden, ohne diesen über die eigentliche Wicklungslänge hinaus verlängern zu müssen. Auch der Rotor kann dann entsprechend verkürzt ausgebildet werden, was Material und Fertigungskosten spart. Die Nutverbreiterung ist erforderlich, um den Sensor so weit außerhalb der Statornut anordnen zu können, dass er einerseits nahe genug am Rotor angeordnet ist, um das von dessen Permanentmagneten ausgehende Magnetfeld und damit insbesondere die Rotorstellung zu erfassen und andererseits nicht durch das Statorblechpaket abgeschirmt bzw. durch das in den Statorwicklungen induzierte Magnetfeld überdeckt zu werden.

Die Nutverbreiterung hat weiterhin den wesentlichen Vorteil, dass der Sensor stets an definierter Stelle im Stator, nämlich im Bereich der verbreiterten Nut angeordnet ist und nicht versehentlich in einer benachbarten Nut montiert werden kann. Erfindungsgemäß wird die Nutverbreiterung, die als solche aus GB-A-2 345 586 bekannt ist, gemäß der Erfindung durch Verformung, insbesondere Kaltverformung gebildet. Eine solche mechanische Nutverbreiterung hat gegenüber anderen materialabtragenden Verfahren, wie dies aus dem Stand der Technik bekannt ist, den Vorteil, dass der magnetisch leitende (Eisenteil des Stators) insbesondere Statorblechpakets unverändert bleibt, so dass im Beriech unmittelbar und neben dem Sensor keine magnetische Sättigung eintritt, sondern der magnetische Fluss durch den Eisenteil des Stators geht und nicht durch den Hallsensor, was zu Fehlmessungen führen könnte und darüber hinaus den Wirkungsgrad des Motors verschlechtern könnte. Die erfindungsgemäße Nutverbreiterung kann nicht nur bei Permanentmagnetmotoren, sondern auch bei anderen Motoren eingesetzt werden, um einen magnetempfindlichen Sensor anzubringen.

Grundsätzlich kann innerhalb dieser Nutverbreiterung jeder beliebige magnetempfindliche Sensor angeordnet werden, besonders vorteilhaft ist es jedoch, hier einen Hallsensor anzuordnen, d. h. einen nach dem Hall-Effekt arbeitenden Sensor. Gerade ein solcher Sensor benötigt in tangentialer Richtung zum Rotor einen gewissen Raum, um die aufgrund des Feldstärkegefälles gekrümmte Elektronenbahn im Leiter und die dadurch gebildete Spannungsdifferenz erfassen zu können.

Der Einsatz eines Hallsensors als magnetfeldempfindlicher Sensor ist besonders vorteilhaft, da ein Hallsensor auch bei kleinsten Rotorgeschwindigkeiten zuverlässig die Rotorstellung detektieren kann. Andere, gegebenenfalls auch geeignete magnetfeldempfindliche Sensoren, wie beispielsweise eine Spule, sind nur bei Veränderung des magnetischen Flusses wirksam und können somit erst ab einer bestimmten Drehgeschwindigkeit des Rotors brauchbare Messwerte liefern. Darüber hinaus sind Hallsensoren kostengünstig in der Herstellung und zuverlässig in der Anwendung. Der Einbau eines Hallsensors in eine solche Nutverbreiterung ist also insbesondere dann vorteilhaft, wenn das Sensorsignal zur Steuerung der Kommutierung dienen soll, um auch bereits beim Anfahren des Motors für eine möglichst optimale Kommutierung sorgen zu können.

Hergestellt wird ein erfindungsgemäßer Stator vorteilhaft so, dass zunächst ein mit Nuten versehener magnetisch leitender Tragkörper, beispielsweise ein Statorblechpaket gegebenenfalls nach Anbringen von Nutenisolationen mit den Statorwicklungen versehen wird, wie dies auch bei Statoren nach dem Stand der Technik erfolgt. Dieser vollständig gewickelte Stator wird dann im Bereich mindestens eines Nutabschnitts an der offenen Innenseite der entsprechenden Nut mechanisch aufgeweitet, wonach im aufgeweiteten Bereich ein magnetfeldempfindlicher Sensor, insbesondere ein Hallsensor angebracht wird. Das mechanische Aufweiten der Nut erfolgt mittels eines entsprechenden keilförmigen Werkzeugs radial von innen her, wobei bevorzugt mit dem Werkzeug nicht nur die Nut über die erforderliche Länge aufgeweitet wird, sondern auch die darin befindliche Wicklung radial nach außen und zusammen gedrückt wird, um somit zusätzlichen Freiraum für den Sensor zu schaffen.

Die Erfindung ist nachfolgend anhand eines in der Zeichnung dargestellten Ausführungsbeispiels näher erläutert. Es zeigen:
- Fig. 1: in stark vereinfachter Querschnittsdarstellung einen Stator bei der Aufweitung einer Nut,
- Fig. 2: in vergrößerter Darstellung die Einzelheit II aus Fig. 1 und
- Fig. 3: eine perspektivische Teilansicht des Stators mit eingesetztem Hallsensor.

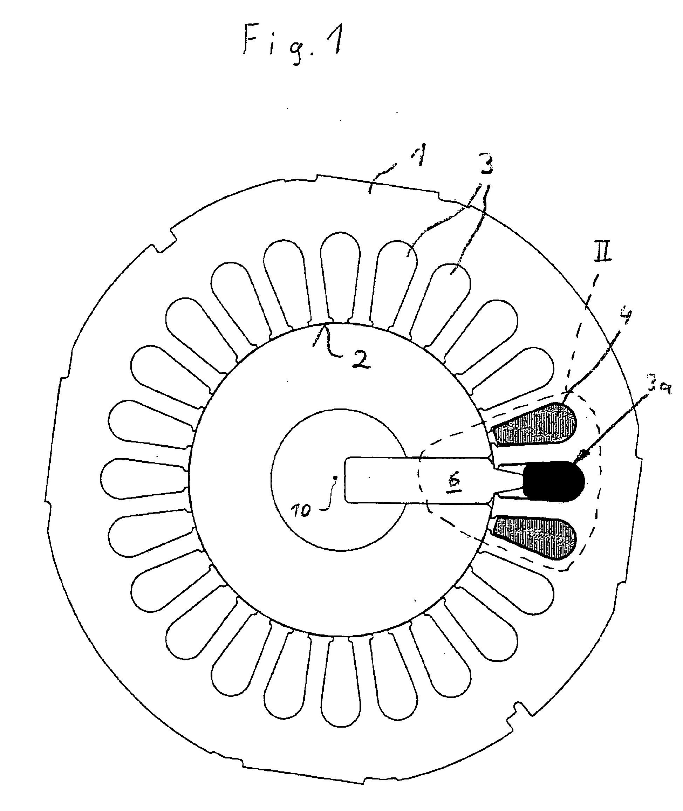

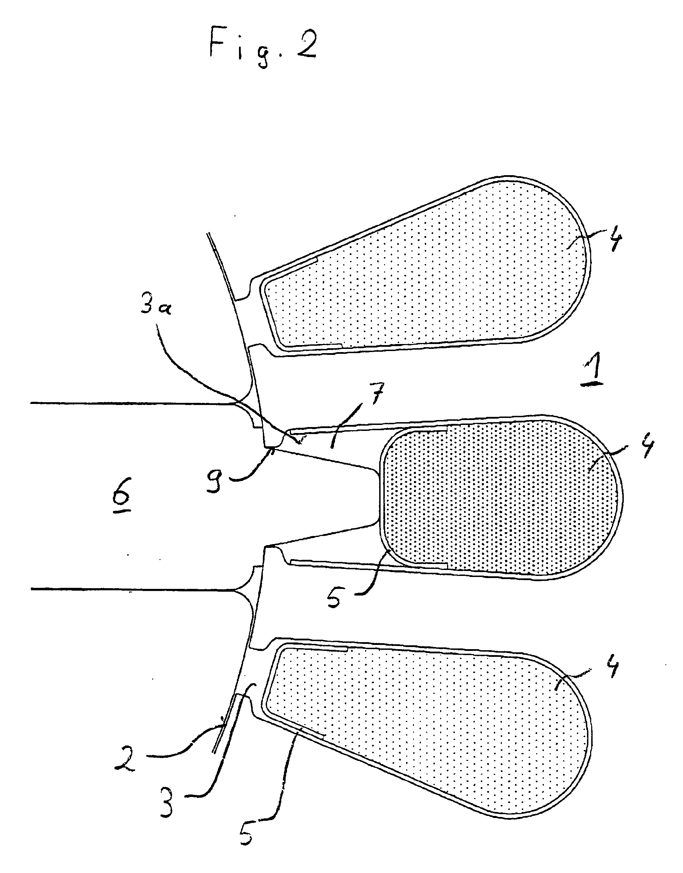

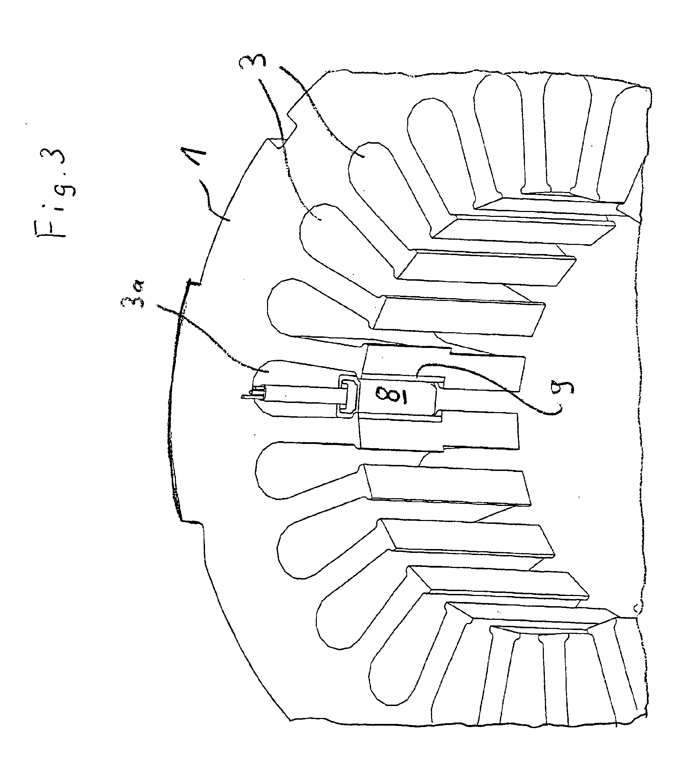

Ein magnetisch leitender Tragkörper 1 in Form eines Statorblechpakets weist im Wesentlichen eine zylindrische Außenkontur mit einer zentralen zylindrischen Ausnehmung 2 auf, in welcher der spätere, hier nicht im Einzelnen dargestellte und mit Permanentmagneten bestückte Rotor läuft. Der Tragkörper 1 weist eine Vielzahl von Nuten 3 auf, welche den Tragkörper 1 über seine ganze Länge durchziehen, die zur Innenseite des Tragkörpers 1 hin offen ausgebildet sind, dort den geringsten Querschnitt aufweisen und zur Aufnahme von Statorwicklungen 4 vorgesehen sind. Die Statorwicklungen 4 sind beispielhaft für drei Nuten in den Fig. 1 und 2 dargestellt, in Fig. 3 sind diese aus Gründen der besseren Übersicht nicht eingezeichnet. Innerhalb jeder Nut 3 ist eine Nutenisolierung vorgesehen, die aus einem elektrisch isolierenden Kunststoff besteht und vor dem Einlegen der Statorwicklungen 4 in die Nuten 3 eingebracht wird. Diese Nutenisolierung 5 kann auch entfallen, wenn die Statorwicklung 4 eine entsprechend widerstandsfähige Isolation trägt.

Die Herstellung von Tragkörper 1, das Einsetzen der Nutenisolierung 5 und das Eingliedern der Statorwicklungen 4 erfolgt bei dem dargestellten Stator in gleicher Weise wie dies an sich bekannt ist. Erst wenn ein solch konventionell hergestellter Stator fertiggestellt ist, erfolgt die Verbreiterung einer Nut 3a über einen Teil ihrer axialen Länge. Hierzu wird ein keilförmiges Werkzeug 6 in die Ausnehmung 2 des Stators verbracht und radial, also quer zur Statorachse 10 in die Nut 3a gepresst, wodurch diese an ihrer Innenseite aufgeweitet wird. Gleichzeitig wird durch das Werkzeug 6 die in dieser Nut 3a befindliche Wicklung radial nach außen gedrückt und gestaucht, so wie dies in Fig. 2 deutlich sichtbar ist. In den so geschaffenen Freiraum 7 wird ein Hallsensor 8 eingegliedert. Bei dem Hallsensor 8 handelt es sich um einen handelsüblichen Hallsensor, der mittels eines Kunststoffsgehäuses hermetisch gekapselt ist, um ihn vor Umwelteinflüssen wie Staub, Feuchtigkeit und dergleichen zu schützen. Der so gekapselte Hallsensor 8 kann im Bereich der Nutverbreiterung 9 durch Pressen, Kleben oder in anderer geeigneter Weise eingegliedert werden und ist so angeordnet, dass er für das vom Rotor ausgehende Magnetfeld empfindlich ist. Der Hallsensor 8 liegt unmittelbar zur Ausnehmung 2 hin, so dass sein Abstand zum Rotor möglichst gering ist. Dieser Hallsensor 8 bildet den Kommutierungssensor des Motors.

Da durch die Aufweitung der Nut 3a an der Innenseite lediglich Material des Tragkörpers 1 verdrängt, nicht jedoch entfernt wird, kann der maximale magnetische Fluss in diesem Bereich nahezu genauso hoch sein wie im Bereich der übrigen, nicht aufgeweiteten Nuten 3, so dass nicht die Gefahr besteht, dass dieser durch den Hallsensor 8 geleitet wird, was zu Fehlmessungen führen könnte. Es können also auch mehrere solcher Nutverbreiterungen über den Innenumfang des Tragkörpers 1 verteilt vorgesehen werden, ohne die magnetischen Eigenschaften des Tragkörpers 1 merklich zu verändern.

Die Länge der Nutverbreiterung 9 in axialer Richtung des Tragkörpers 1 (also in Richtung der Statorachse 10), ist abhängig von der Länge des einzusetzenden Hallsensors 8. Bei dem anhand der Zeichnung beschriebenen Stator eines Permanentmagnetmotors weist die Nutverbreiterung 9 eine Länge von 21 mm auf. Die Breite dieser verbreiterten Nut 3a am Innenumfang beträgt 4,3 mm gegenüber der normalen Nutbreite von 2,8 mm. Im Übrigen beträgt die mittlere Nutbreite 5 mm bei einer mittleren Nuttiefe von 16 mm. Der vorstehend beschriebene Stator weist 24 Nuten 3 bzw. 3a auf, in denen die Statorwicklungen 4 angeordnet sind. Der dargestellte Motor ist für eine Leistung von ca. 150 Watt ausgelegt, der Tragkörper 1 weist einen Innendurchmesser von 55 mm bei einer axialen Länge von 40 mm auf.

### Bezugszeichenliste

- 1 -: Tragkörper
- 2 -: Ausnehmung
- 3 -: Nuten
- 3a -: verbreitete Nut
- 4 -: Statorwicklung
- 5 -: Nutenisolierung
- 6 -: keilförmiges Werkzeug
- 7 -: Freiraum
- 8 -: Hallsensor
- 9 -: Nutverbreiterung
- 10 -: Statorachse

## Patentansprüche

1. Stator eines Elektromotors, insbesondere eines Permanentmagnetmotors, mit mehreren zur Statorachse hin offenen Nuten (3) zur Aufnahme der Statorwicklungen (4), bei dem mindestens eine Nut (3) über einen Abschnitt ihrer axialen Länge nahe ihrer zur Statorachse hin offenen Innenseite breiter als der selbe Abschnitt der übrigen Nuten (3) ausgebildet ist, **dadurch gekennzeichnet, dass** die Nutverbreiterung durch Verformung gebildet ist.

2. Stator nach Anspruch 1, **dadurch gekennzeichnet, dass** im Bereich der Nutverbreiterung (9) ein magnetfeldempfindlicher Sensor (8) vorgesehen ist.

3. Stator nach Anspruch 2, **dadurch gekennzeichnet, dass** der magnetfeldempfindliche Sensor ein Hallsensor ist.

4. Stator nach Anspruch 2 oder 3, **dadurch gekennzeichnet, dass** der Motor ein Permanentmagnetmotor ist und der magnetfeldempfindliche Sensor (8) den Kommutierungssensor bildet.

5. Verfahren zum Herstellen eines Stators, insbesondere eines Stators nach einem der vorhergehenden Ansprüche, bei dem ein mit Nuten (3) versehener magnetisch leitender Tragkörper (1) ggf. nach Anbringen von Nutenisolationen (5) mit Statorwicklungen (4) versehen wird, wobei nach dem Anordnen der Statorwicklungen (4) innerhalb der Nuten (3) mindestens eine Nut (3 a) an ihrer zur Statorachse hin offenen Innenseite über einen Abschnitt ihrer axialen Länge mechanisch aufgeweitet wird, wonach im aufgeweiteten Bereich (9) ein magnetfeldempfindlicher Sensor, insbesondere ein Hallsensor angebracht wird, **dadurch gekennzeichnet, dass** die Nutverbreiterung durch Verformung gebildet ist.

## Claims

1. A stator of an electric motor, in particular of a permanent magnet motor, with several grooves (3) which are open towards the stator axis, for receiving the stator windings (4), with which at least one groove (3) over a section of its axial length near to its inner side open towards the stator axis is designed wider than the same section of the remaining grooves (3), **characterised in that** the groove widening is formed by deformation.

2. A stator according to claim 1, **characterised in that** a sensor (8) sensitive to a magnetic field is provided in the region of the groove widening (9).

3. A stator according to claim 2, **characterised in that** the sensor sensitive to a magnetic field is a Hall sensor.

4. A stator according to claim 2 or 3, **characterised in that** the motor is a permanent magnet motor, and the sensor (8) sensitive to a magnetic field forms the commutation sensor.

5. A method for manufacturing a stator, in particular of a stator according to one of the preceding claims, with which a magnetically conductive carrier body (1) provided with grooves (3), as the case may be after incorporating groove insulations (5), is provided with stator windings (4), wherein after arranging the stator windings (4) within the grooves (3), at least one groove (3a) at its inner side open towards the stator axis is mechanically widened over a section of its axial length, whereupon a sensor sensitive to a magnetic field, in particular a Hall sensor, is attached in the widened region (9), **characterised in that** the groove widening is formed by deformation.

## Revendications

1. Stator d'un moteur électrique, en particulier d'un moteur à aimant permanent, présentant plusieurs rainures (3) ouvertes en direction de l'axe du stator, pour recevoir les enroulements statoriques (4), une rainure (3), au moins, étant, au voisinage de sa face intérieure ouverte en direction de l'axe du stator et sur un tronçon de sa longueur axiale, réalisée plus large que le même tronçon des autres rainures (3), **caractérisé en ce que** l'élargissement de la rainure est créé par déformation.

2. Stator selon la revendication 1, **caractérisé en ce qu'**un capteur (8) sensible au champ magnétique, est prévu dans la zone de l'élargissement (9) de la rainure.

3. Stator selon la revendication 2, **caractérisé en ce que** le capteur sensible au champ magnétique est un capteur à effet Hall.

4. Stator selon la revendication 2 ou 3, **caractérisé en ce que** le moteur est un moteur à aimant permanent et le capteur (8) sensible au champ magnétique forme le capteur de commutation.

5. Procédé de fabrication d'un stator, en particulier d'un stator selon l'une des revendications précédentes, suivant lequel un corps porteur (1) magnétiquement conducteur, doté de rainures (3), est, éventuellement après mise en place d'isolations de rainure (5), pourvu d'enroulements statoriques (4), une rainure (3a), au moins, étant, après la disposition des enroulements statoriques (4) à l'intérieur des rainures (3), élargie mécaniquement, au niveau de sa face intérieure ouverte en direction de l'axe du stator et sur un tronçon de sa longueur axiale, après quoi un capteur sensible au champ magnétique, en particulier un capteur à effet Hall, est monté dans la zone élargie (9), **caractérisé en ce que** l'élargissement de la rainure est créé par déformation.
